# EUROPEAN PATENT APPLICATION

(11) **EP 4 086 654 A1**
(43) Date of publication of application: **09.11.2022**
(21) Application number: 22170034.7
(22) Date of filing: 26.04.2022
(51) Int. Cl.: G01S 5/06, G01S 5/10

(54) **METHOD, DEVICE AND SYSTEM FOR PRECISE POSITION DETERMINATION**

(30) Priority: 06.05.2021 DE 102021111755
(71) Applicant: Einhell Germany AG, 94405 Landau / Isar (DE)
(72) Inventor: THANNHUBER, Markus, 94405 Landau an der Isar (DE)
(74) Representative: Withers & Rogers

(57) **Abstract**

A positioning method for a robot, a robot and a positioning system are provided, wherein the method is based on a system model of an estimated position of the robot and estimated positions of a plurality of reference points within an environment.

## Description

The present invention belongs to the field of positioning methods, devices for implementing the positioning methods and systems comprising the devices and further means for implementing the positioning methods.

The present invention is directed to systems and methods for estimating a position of a robot which moves and/or is able to move within an area or volume, by repeatedly measuring the distances between the robot and each or some of a plurality of reference points and maintaining a system model of the estimated positions of the robot and the reference points, based on the distance measurements, including updating the size of errors on the measurements.

Methods for determining the position of a node of a plurality of nodes, by measuring a plurality of distances between nodes of a plurality of nodes, are used in the art for position determination.

Distance measurements between nodes may be achieved in a number of ways, and, for example, by using information on sending and receiving electromagnetic signals through appropriate transmitting and receiving means suitable for transmitting and receiving electromagnetic signals, comprised or installed in each of the nodes. Distance measurements based on transmitting and receiving electromagnetic signals between two nodes typically make use of two possible characteristics of the electromagnetic signals, such as the signal strength (SS), or the amplitude of the signal arriving at the receiver, and the time of flight (ToF), or the time that takes the signal to travel from the transmitter to the receiver.

Nodes may comprise a number of signals receivers, transmitters or transceivers. Once the distance between two nodes is measured or obtained, the position of at least one the nodes may be obtained. Distance measurements comprise uncertainties, eliminable or not eliminable, which may offer various insights on several features of the measurement, such as accuracy, precision, reliability, repeatability and usability.

It is understood that any type of measurement may carry uncertainties owing to the perturbative nature of the act of measurement itself, and to the use of a probe that may inherently perturbate, as in disturb or alter or modify, the environment or system which it is intended to probe, or measure, for quantitative probing. In the present application reference is made to said uncertainties throughout. Moreover, because uncertainties may refer to how much a certain result of a certain measurement deviates from a precise estimation of a value for a given observable, uncertainties may be also interchangeably referred to as "errors" throughout the entire application.

Moreover, as it is further generally understood that measurements uncertainties are an unwanted consequence of any method to obtain a measurement, methods known in the art are understood to focus typically on the elimination or minimization of said uncertainties from the measurements, in order to achieve great precision. Ways to achieve this elimination or minimization are found to work mostly by improving the measurement equipment and/or introducing more sophisticated, additional, equipment, to improve accuracy and precision of the measurement and of the final estimated position.

Typical disadvantages of the methods known in the art as described above are, therefore, that they might become expensive and may add bulkiness to the nodes accommodating the equipment, if the acquisition of further more accurate and diverse equipment is pursued, besides, for example, the essential transmitting and receiving means.

Moreover, the precision achieved may still be limited by the additional, more precise or more accurate equipment, which may not be suitable for providing further measurements of increased precision and accuracy, owing to said equipment becoming obsolete. As the fast pace of technological developments may bring improved equipment to the market in shorter times, pushing the limit of technical accuracy would require frequent updating of said equipment, increasing the costs, and requiring structural modifications of the nodes accommodating the transmitting and receiving means.

The present invention aims to at least partially overcome at least some of the disadvantages of the prior art.

In particular, to this end, and according to a first embodiment of the present invention, a positioning method for a robot is provided, based on a system model of an estimated position of the robot and estimated positions of a plurality of reference points within an environment, the method comprising the following steps of: obtaining a plurality of distance measurements from at least a first subset of the plurality of reference points to at least one of the robot and at least one of the plurality of reference points, each distance measurement of the plurality of distance measurements being affected by at least one of a plurality of different independent error sources; providing an error size for each one of the distance measurements, the error size being associated to at least one of the different independent error sources; estimating a position of the robot based on the plurality of distance measurements and the provided error sizes; moving the robot from a location corresponding to the estimated position of the robot to a further location, or selecting a further location the robot is able to move to within the environment; obtaining a further plurality of distance measurements from at least a second subset of the plurality of reference points to at least one of the robot and at least one of the plurality of reference points, each distance measurement of the further plurality of distance measurements being affected by at least one of the different independent error sources; updating at least one of the provided error sizes in the system model based on the further plurality of distance measurements; estimating a further position of the robot corresponding to the further location based on the further plurality of distance measurements and the at least one updated error size.

According to the present invention, a robot is intended as an autonomous, or semiautonomous, movable or driving device, apparatus or machine, wherein a movable or driving device, or apparatus or machine may be understood as capable of moving, preferably by comprising means suitable for enabling motion, such as wheels, legs, feet, crawler belts, spheres, or any combination thereof, and/or means for performing motion in a way that does not rely on contact to a surface and/or friction. The robot of the present invention may be provided with computer equipment that is able to process sensor data and means to acquire, receive, store, process and/ or transmit data. The robot of the present invention may be capable of moving by processing instructions to perform movement, such as, for example, going from a current location to a further location, and it may be capable of performing a number of different actions or tasks. Among said actions or tasks are, for example: mowing a lawn, ventilating, scarifying, blowing leaves, fertilizing, sowing, sweeping, vacuuming, leaf vacuuming, transporting, polishing, snow clearing, etc., or any combination thereof. Moreover, the robot may then be equipped with means to carry out said actions or tasks, such as, for example, blades, knives, aeration rollers, collection bags, fertilizer containers, spray device, ejector device, dust container, roller brush, suction station, leaf catcher with or without integrated chopper, suction tube, blowpipe, container, storage space, loading area, polishing attachments, polishing agent container, snow blower, salt container, etc., or any combination thereof.

According to the present invention, a position or estimated position is a value or estimated value establishing the coordinates of a location of an object in a given reference system. A number of locations within an area or volume may constitute, for example, a path, a perimeter, a border or a boundary, each of said locations being associated with a respective position. An estimated position may be obtained, among other methods, as a result of a calculation and/or of a measurement process or a combination thereof; a position may be additionally given, predetermined using mathematical methods or determined using sensor data processing, and/or otherwise provided. According to the present invention, it is to be understood that an estimated value comprises a value and one or more uncertainties, or errors, on that value, wherein the size of said uncertainties, or errors, determines the accuracy of said value and/or of the estimated value. Said uncertainties or errors are associated with an error size which is, for example, obtained, acquired, provided, determined, measured or calculated and it may be, therefore, an expression of the accuracy of said acquisition, provision, determination, measurement or calculation or of any otherwise attainment of said error size.

In the meaning of the present invention, the evaluation of said error size may lead to a number of considerations, according to a number of given criteria, with respect to whether a measurement or any of the attainment processes listed above may be leading to accuracy. Accuracy is intended as a measure of how close a value obtained by any number of processes as listed above, for example, measured, is to an expected or preferred value. A categorization of expected values and/or of what constitutes expected values may be given, and a certain error size, or range of error sizes may be used to evaluate what category a given value belongs to. A more detailed discussion on uncertainties, error sizes and estimated values is provided further below.

According to the present invention, a reference point may be understood as referring to and representing a location, therefore having coordinates associated to it that determine, or inform about its position, and which therefore are then utilized in the process; if the reference point is an object, said object may be provided with means to acquire, receive, store and/ or transmit data, an/or sensor data. A reference point according to the present invention does not need to be movable, but it may be provided with means to enable motion, if necessary, as described above. According to the present invention, two or more reference points may be provided within a given environment. The two or more reference points form therefore a plurality of reference points. The reference points of the present invention may be generally essentially stationary and for example distributed in a way to define a boundary of a premises, or to define an area or volume of the premises, or outside a given boundary or within.

A combination of the robot and the plurality of reference points of the present invention, may be referred to herein as a positioning system, and each of the components or units of said systems may be referred to as elements of the positioning system; the robot itself comprising driving ability and means for performing tasks, as described above, may be referred to as an autonomously driving system, or sometimes as a mobile system, or mobile object. In addition, the positioning system of the present invention may comprise a base station, capable of serving as a home base and a charging station for the robot. Moreover, the position associated to the location of the base station according to the present invention may be attributed as a possible origin of a reference system in the environment as described in the present invention, so that, starting from said defined origin, the coordinates of all the system elements and therefore their positions may be expressed with reference to said system origin.

According to the present invention, a subset of the plurality of reference points, or respectively of any other plurality, may refer to any number of reference points of the plurality of reference points, or it may refer to the entirety of the plurality of reference points. In particular, it is understood that a first subset of the plurality of reference points may refer to any number of the plurality of reference points of the present invention, and likewise a second subset of the plurality of reference points may refer to any number of the plurality of reference points of the present invention, comprising the entirety of the plurality of the reference points. A first and a second subset of the plurality of reference point may refer to an ensemble of reference points comprising equal or different numbers of reference points. Moreover, the qualifiers "first" and "second" may be simply used to distinguish between two different subsets, and further numeral adjectives may be used for further subsets, or may be intended, if so specified, to indicate which subset has been used or selected or referred to as first or second, sequentially in time or for other scopes, if so specified.

An environment according to the present invention is an area or volume or a premises, real or virtual, wherein any one of the steps of the method according to the present invention may be carried out, or with respect to which they may be carried out, and generally wherein the reference points, real or virtual, are located. An environment which is intended as an area or volume, may be therefore understood, respectively, as a two-dimensional or three-dimensional environment.

According to the present invention, an estimated position of a given object, such as for example, the robot according to the present invention, may be obtained using distance measurements of that object from one or more reference points. The object, such as the robot, may be moving, continuously moving, only moving at given times, or it may also be stationary. It is preferred that the reference points be essentially stationary. According to the present invention, it is understood that a plurality of distance measurements may have a positive effect in improving the precision of obtaining an estimated position of a given object.

A preferred approach according to the present invention is the continuity approach: in this approach, an underlying assumption is made that the autonomous driving system essentially moves continuously, i.e. only accelerates or decelerates within its own physical limits. In addition, a further preferred assumption is made that metrological data from the drive system, such as for example, wheel speeds, further constrain the system.

Distance measurements according to the present invention may be affected by at least one of a plurality of different independent error sources. An error size is provided for each distance measurement according to the present invention, wherein said error size may be associated to at least one of the different independent error sources. Examples of error sources will be described in more detail later on. However, an error source according to the present invention may be understood, in a first approximation, in association with measurement equipment, measurement devices, with the nature of the measurement itself, the state of motion of one of the objects between which distance measurements are obtained, physical disturbances and/or physical effects affecting a physical measurement of a distance between two objects in an environment, objects present in a real or virtual environment which may interfere with a measurement, etc., or any combination thereof.

Identifying error sources enables establishing their contribution to the at least one error size, and using said contribution more efficiently to improve the estimating of the estimated position of the robot.

According to the present invention, a position of the robot is estimated based on said plurality of distance measurements and the provided error sizes. Further, according to the present invention, the robot may be moved to a further location, a further plurality of distance measurements may be obtained, at least one of the provided error sizes may be updated, based on the further plurality of distance measurements, and a further estimated position may be estimated based on both the further plurality of distance measurements and at least one of the updated error sizes. Alternatively, a system model may be populated by selecting a further location in a given environment wherein the robot is intended to operate and perform the steps of estimating a further position associated to said location, to which the robot might have not yet moved to, but to which it would be able to move to, if so instructed. This allows to populate a model of possible further locations and, for example, to construct, pre-emptively, a virtual path.

According to the present invention, a further location may be intended as further with respect to a location relative to which distance measurements have already been obtained, and it may represent a location from which further measurements may be obtained. Therefore, according to the present invention, a further location may be either distinct from a former location, or it may coincide with said former location; nevertheless, if further measurements are obtained with respect to said location, said location may still be referred to as a further location. A further location may be a physical location to which the robot moves, or may be able to move to if instructed to do so, and from which, with respect to, or relative to, further measurements are therefore obtained. Moreover, a further location may be a location selected in an environment and utilized for obtaining further measurements, without physically moving the robot to said further location. A further location may therefore be regarded as a starting point for obtaining further measurements, in particular distance measurements, when carrying out the method for the present invention.

The system model of the present invention comprises estimated positions of the robot and of the plurality of reference points and is intended as a model memory of the estimated positions. Estimated positions include provided error sizes, and the maintaining of the model comprises the updating of at least one of the provided error sizes. The model can be stored in a storage device, either physical or virtual, such as for example, cloud storage, either in the robot itself, or in the base station or elsewhere, or using a combination of storage methods and/or devices thereof.

Updating at least one of the provided error sizes has the advantage that the model is as accurate and precise as wished in providing accurate and precise positioning, depending on which error sizes are updated according to analysis and handling of at least part of the provided error sizes.

According to the present invention, the updating of at least one of the provided error sizes may be intended as replacing a previously provided error size based on current distance measurements, in particular based on a further plurality of distance measurements, with respect to a plurality of distance measurements, in particular another or a former plurality of distance measurements. According to the present invention, therefore, following a further plurality of distance measurements, a further error size may be provided, wherein said further error size may replace a current error size provided based on pre-obtained measurements.

According to a further embodiment of the method of the present invention, the distance measurements are carried out using a plurality of transceivers, preferably ultra-wideband, UWB, transceivers, wherein at least one, preferably more than one, of the plurality of transceivers is installed on the robot, and wherein each of the plurality of reference points comprises at least one, preferably more than one, of the plurality of transceivers.

According to the present invention, a transceiver may be described as a device for both transmitting and receiving information, for example electromagnetic signals, through a transmission medium, for example air. Transceivers are typically intended to perform wirelessly, and can therefore be installed freely in a given environment. Transceivers, and in particular UWB transceivers, may be used in the present invention and installed on each element of the positioning system, and multiple transceivers may be installed in a single element. Ultra-wideband, UWB, is a short-range, wireless communication protocol operating using electromagnetic waves of longer wavelengths than infrared wavelengths, in particular radio waves. Typical UWB transceivers operate at very high frequencies, in particular a broad range of GHz frequencies and can be used to acquire spatial and directional data with high accuracy.

The autonomously driving system of the present invention and each of the reference points of the positioning system may be equipped with at least one transceiver or with two or more transceivers for optimized measurements. Said transceiver may comprise UWB transceivers. The base station of the positioning system, if present, may also be equipped with at least one UWB transceiver or with two or more for optimized measurements. The presence of more than one transceiver increases the number of distance measurements which are possible between the robot and the reference point; in turn, a greater number of distance measurements may have an effect on the accuracy of the estimated position, typically a cumulatively positive effect, as a greater number of measurements may provide a greater number of error sizes, the handling of which may in turn inform on the system and the measurements themselves, eventually conducing to discrimination of measurements and error sizes, based on said evaluation of error sizes according to given criteria.

Typical transceiver-based distance measurements, in particular UWB-based distance measurements may follow one of the following principles: Received Signal Strength Indicator (RSSI), Time of Arrival (TOA), Time Difference of Arrival (TDOA), Round Trip Time (RTT) or Angle of Arrival (AOA). In principle, a UWB system may have to evaluate at least one of, for example, signal strengths, transit times or phase offsets. Precise time synchronization is required for runtime measurements. Latencies caused by physical operations in the transceivers may preferably be compensated, for example by means of calibration. Direct and diffuse reflections, diffraction, absorption and refraction, focus effects etc. through objects in or around an environment (walls, fences, bushes, furniture, etc.) may lead to multiple signal paths, phase overlays etc. which cause considerable measurement uncertainties (in particular environmental measurement uncertainties, according to the present invention). Loss of synchronization or loss of calibration may lead to systematic measurement errors.

According to a further embodiment of the positioning method of the present invention, the robot comprises at least a first transceiver and a second transceiver of the plurality of transceivers, arranged or installed on a housing of the robot at a given distance from one another, and wherein the system model comprises a direction-of-travel information.

According to the present invention the use of two or more transceivers permanently installed on the robot opens up the possibility of determining the direction of travel, or orientation, as well, in contrast with the prior art, wherein the orientation or the driving angle may typically be determined with radio-based systems using the Angle of Arrival approach. This latter approach may require complex antennas (multipoles) in order to determine the angle of arrival from phase shifts, which increase the costs of the system. An advantage of the present invention according to said further embodiment is therefore the use of transceivers installed at a given distance on the autonomously driving system, for example in diametrically opposite position. Differences in the obtained distance measurements, when comparing measurements obtained from the two transceiver arranged as above, allow conclusions to be drawn about the orientation without installing additional equipment. Moreover, orientation may also be deduced in combination with time series observations to be discussed later on, and an underlying assumption of an always tangential movement. Alternatively or additionally, gyroscopic systems and compasses may also provide data for orientation.

According to a further embodiment of the present invention, the robot moves within the environment, and the environment comprises the reference points and at least a subset of the different error sources, such that the robot can receive a signal transmitted by at least one, preferably more than one, of the reference points at any position within the environment.

According to a further embodiment of the present invention, and as briefly introduced above, the robot may be capable of performing a number of tasks, and may be at least any one of a lawnmower, a ventilating device, a scarifier, for cutting and removing debris, for example of grass, from a lawn, a leaves blowing device, a fertilizing device, a sowing device, a sweeping device, a vacuuming device, a leaf vacuuming device, a transporting device, a polishing device, a snow clearing device, or any combination thereof, and the environment comprises any one of a lawn, a field, generally a piece of land, an area or volume or any premises or a combination thereof, and wherein the model is used to determine at least one of a path for mowing the lawn and/or for performing any of the listed tasks or any combination thereof.

According to a further embodiment of the present invention, an initial estimated position is provided for the system model for at least one, preferably each one, of the plurality of reference points.

An initial estimated position of at least one or preferably each one of the plurality of reference points in the environment may be given in the model, to provide a starting point for the plurality of distance measurements. Said position, or positions, may be subsequently updated with the new obtained position or positions resulting from the distance measurements, in order to improve the system model. An initial estimated position or positions of an essentially stationary reference point may be also provided among other methods, by manual measurements carried out by an operator.

According to a further embodiment of the present invention, the steps of estimating the positions are based on a set of mathematical relationships, which are overdetermined with respect to each plurality of distance measurements, respectively.

In this respect, in the meaning of the present invention, when using two transceivers installed on the driving system, an unambiguous location determination including measurement uncertainty can be carried out mathematically, assuming continuity, with the measurement of the distances of the transceivers installed on the driving system from a transceiver located anywhere else in the environment of the present invention, in particular on any of the reference points of said environment.

If a system parametrization, in the sense of a set of initial or current parameters, sets of values, or constraints, of the driving system is provided, an expected position may also be determined in advance (dead reckoning), and independently from further distance measurements. According to the present invention, every distance measurement and even more every further distance measurement leads to an overdetermination of the system, wherein overdetermination is understood as excess determination, and is intended as being a consequence of, for example, multiple measurements, in particular multiple measurements of distances, wherein one single measurements may already provide said distances. An effect of overdetermination is the provision of multiple results or determinations of the same observable; through the consideration of said results or determinations, a more accurate value for the observable may be obtained, derived or provided.

Moreover, in the meaning of the present invention, when at least two transceivers are installed on a given object/node, be it the robot or at least one of the plurality of reference points, measurements of distances between pairs of built-in transceivers with respect to one another may be obtained, as well as multi-dimensional scaling, MDS, of distance measurements between transceivers on a mobile unit with the transceivers of any of the reference points. MDS may enable a representation and treatment in a lower dimensional space of objects having distances in a high dimensional space, with the aim of obtaining Euclidean distances as close as possible to the measured distances. This allows in particular a more stable and steady assessment of the measured distances with respect to distance measurements to the transceivers on a mobile unit. In this respect, further to the definitions given above according to the present invention, and in the meaning of the present invention, one of the robot or one of the plurality of reference points may be occasionally referred to by referring to its means to receive and/or transmit information, such as, for example, the transceiver or transceivers installed "on board", using expressions such as "mobile transceiver" meaning the transceiver installed on the robot, as the robot is capable of moving and in some instance assumed to be moving, or in a preferred instance assumed to be continuously moving. This differentiates these transceivers from transceiver installed on reference points: since the reference points are essentially or preferably stationary, or in instances may be assumed to be stationary, a transceiver that is installed on any of said reference points may be referred to as a "stationary transceiver" or essentially stationary transceiver. While typically, the MDS method is carried out without taking measurement uncertainties into account, when utilized to achieve a homogeneity of distance mapping through optimization, the method may include the presence of a model uncertainty. However, time series measurements may represent preferable means of statistically optimizing distance measurements relying on the multiple uncertainties associated with the multiple measurements.

According to a further embodiment of the present invention, the steps of obtaining distance measurements may be carried out continuously and the pluralities of distance measurements form continuous time series.

According to the present invention, it is understood that time series are formed when observations and/or measurements of an observable, such as, for example, distance measurements, occur sequentially through time. Therefore, in a simplified instance, multiple measurements form a time series when obtained, acquired or performed sequentially. Time series are used to evaluate and compare single measurements or groups of measurements to each other, and to obtain or perform various types of statistical analysis. In particular, an advantage of considering the time series according to the present invention is that the accuracy of the location determination in regular operation in the forwards-backwards direction has to be less precise than in the left-right axis. Owing to the driving dynamics of the system, averaging tends to have negative effects in the forward-backward direction (e.g. trailing estimated value), whereas the right-left axis benefits greatly from the averaging. In the meaning of the present invention, in the case of moving systems, such as the autonomous driving system as described above, the direct path between two transceivers may be completely blocked again and again, owing to objects present in the environment, which may lead to overestimating these distances, or that distances that are too long are estimated. Therefore, a preferred approach according to the present invention is based on obtaining and evaluating or analysing time series of distance measurements in particular of the distances between the individual essentially stationary transceivers, such as those associated with and/or installed on reference points, and the transceivers installed on the mobile system, also identified in some preferred instances as the robot of the present invention.

According to a further embodiment of the present invention, the steps of obtaining distance measurements may be repeated until a predetermined value for the error size is achieved.

This helps providing tailored results to the positioning problem, according to several parameters of a given system, such as required level of precision, efficiency, data storage capabilities, or time or computational or other constraints, and/or any combinations thereof.

According to a further embodiment of the present invention, the distance measurements to which a value for the error size is associated that is outside of a range of frequently determined error sizes may be discarded or set aside for further processing.

According to the present invention, a distance measurement falling in a range far from expectations or simple predictive considerations is considered to have failed, in that it can be already categorized as laying outside of most common or frequently measured or expected distances for a particular pair of transceivers. Such measurement would be considered an outlier. The outlier may be clearly identified and may be discarded, i.e. not used for statistical processes. However, if outliers persist, this can be taken into account in the statistical error analysis in the errors, as an indicator of an underlying unsolved issue regarding the measurement and all the variables involved, or a distance measurement may no longer be used in the positioning model until the error situation has been rectified.

According to a further embodiment of the present invention each one of the distance measurements is considered to be affected by at least one of: systematic error sources, associated with measurement errors caused by at least one of the robot, at least one of the plurality of reference points itself, or by at least one transceiver; environmental error sources, associated with measurements errors caused by objects located in proximity to the robot and/or to at least one of the plurality of reference points; and, statistical error sources associated with remaining errors caused by stochastic variations.

In the meaning of the present invention, the distance measurements as described so far may be affected by uncertainties, or errors, deriving from or caused by at least one of the different independent error sources mentioned above. The entirety of errors affecting distance or other measurements relating to a system, may be occasionally referred to in the following as systemic errors.

As a matter of background, and according to the present invention, signal detection, as a type of measurement, may be itself a cause of measurement uncertainties and/or be affected by measurement uncertainties of different types, distance measurement determination may be affected by errors of different types, the determination of positions may be affected by errors of different types deriving by the combination of signal detection errors and distance measurements errors, according to the individual weights of the errors. Any measurement and method based on any device, such as, for example, a sensor, has to deal with uncertainties caused by the way said sensor operates, technical and physical limitations to the achievable accuracy and/or precision, and, for example, by the way sensors are calibrated, and/or the way sensor data are acquired, transmitted and/or received, stored, processed, etc., among others. However, because of the inherent not eliminable nature of at least some of the uncertainties, a great deal of information may be obtained by their handling and analysis that may help overcome their intrinsic limiting effect, and therefore such approach is used advantageously in the present invention.

According to the present invention, it is understood that multiple methods may exist to obtain measurements, for example of distances, between transceivers, such as for example methods that rely on distance measurements only, and methods additionally relying on precise angle determination. Examples of said measurements may be identified respectively as measurements utilizing UWB positioning and measurements utilizing line-of-sight positioning. A fundamental difference between UWB positioning and line-of-sight positioning may be acknowledged in that using line-of-sight positioning, the precision of the angle determination is obtained by the resolution of the protractor, which is an additional instrument intended for measuring angles very precisely, and may be achieved rather well so that, in this type of measurements, uncertainties in the angle measurement itself may be neglected. With typical UWB positioning, instead, systematic, statistical and environmental measurement uncertainties (of up to 30 cm) may be expected. These uncertainties on angle determination may be advantageously taken into account for all position determinations or attainment, and should not be disregarded as they are inherent to the measurement typology, and may contribute greatly to achieving great positioning precision without the aid of precise angle determinations or further specialized equipment.

Therefore, according to the present invention, obtaining precise position may be achieved, for example, with the help of less precisely positioned or initially unknown reference points that may be used to initially populate the system model, whose position in the system model is improved over time through statistical processes, for example leading to a reduction of positional uncertainty in the model.

According to a further embodiment of the present invention, each distance measurement is decomposed into multiple independent spatial components (x, y, z), and for each component, a corresponding component error size (sx, sy, sz) corresponds to the sum of a systematic error component size (sxS, syS, szS), an environmental error component size (sxP, syP, szP), and a statistical errors component size (sxN, syN, szN).

According to the present invention, the robot or autonomously driving system, which in one particular case may be an autonomous mower, may be further equipped with a computing unit. A computing unit may be alternatively or additionally installed in the base station or set up as a separate computing unit, having sufficiently powerful processors and a sufficiently large persistent memory to calculate and maintain a model representation of the environment. In particular, any of the computing units may contribute to the systematic handling of systemic errors, namely systematic, statistical and environmental errors, associated to different independent error sources, such as systematic, statistical and environmental error sources, through evaluation and survey of suitable approaches, through systematic calculation of the error propagation, and through optimized calculation of error-prone variables in overdetermined situations.

According to the present invention, a systematic consideration of the errors in the system may be carried out with respect to the coordinates x and y (2D) or x, y and z (3D) of a given environment, and may be associated with any of the elements/objects in the model, and including for example, a base station, if present, UWB or any other transceivers, robotic units (including associated UWB transceivers or other sensors or markers), other radio-based, optical or acoustic markers. It is understood that, if a base station is present, said base station may be taken as coordinate origin; however, according to the present invention, a coordinate origin may be defined by convention as any other point in the environment. In any event, it is preferred that when a position be estimated with respect to a provided origin, its determination is carried out applying global translation corrections all other objects, if errors in the positioning of the base station as origin, or of any other origin, and of the associated UWB transceivers (or other radio-based or optical markers) are detected.

The errors in sx, sy or sx, sy, sz may be represented and treated in simplified form as simple standard deviations, which in the case of normally distributed random variables may be assumed to roughly correspond to the statistical spread s = root (Var (set of measured random variables)). Alternatively, said errors may be represented and treated also in the form of further parameters that describe the random or error distribution more precisely (e.g. asymmetry factors, amplitudes, half-widths, or the functionals of the distribution, etc.). As an alternative to Cartesian coordinates, model parameterization in polar or cylindrical coordinates is also conceivable. The same applies here to the systematic description of errors, for example r, alpha, beta with sr, sAlpha, sBeta. For the sake of simplicity, only the handling of sx and sy may be discussed and/or referred to in the following.

According to a further embodiments of the present invention, at least a subset of each of the plurality of distance measurements or of each of the further plurality of distance measurements relative to one or more of the reference points are clustered into route clusters of distance measurements using cluster-forming algorithms.

In the meaning of the present invention, any of the possible computing units may carry out at least any of cluster formation, time series and measurement error scatter and optimized calculation starting from the pluralities of distance measurements for position determination according to the present invention.

Moreover, a subset of the plurality of the distance measurement or of the further plurality of distance measurement may take into account any number of the plurality or further plurality of distance measurements or the entirety of the plurality or of the further plurality of distance measurements. Any of the distance measurements of any given subset is obtained relative to or from one or more of the reference points of the present invention. Any of the subsets of the plurality of the distance measurement or of the further plurality of distance measurement according to the present invention may include a number of measurements further forming a plurality, of smaller or equivalent order as the initial plurality of which it represents a subset, and may therefore be treated as a series of multiple measurements obtained sequentially in time, or a time series as defined above.

The measuring points along the time series can be divided into route clusters. This is done, for example, using cluster-forming algorithms. If the distance measurements of any subset of a plurality of distance measurements, according to the present invention, return several different measured distances, and are therefore being assigned to several measured distances clusters, only the first cluster, or cluster 1, returning the shortest distance, when compared to the overall measured distances, may be acknowledged as of relevance, according to the present invention. In the meaning of the present invention it is therefore to be understood that by first cluster, or cluster 1, is the cluster grouping the shortest of the distance measurements. Measurements assigned to another cluster may be discarded, or set aside for further processing. The latest measurements, which can be clearly assigned to the first cluster, are used to determine the position, as long as only a given time duration that is considered sufficiently short has elapsed. If for a distance measurement no first cluster is obtained after a longer period of time than a given time duration has elapsed, said distance measurement may not be taken into account in estimating a position.

According to a further embodiment of the present invention, the frequency of the at least a subset of any of the plurality of distance measurements being assigned to a cluster is monitored for determining the measurements reliability.

According to the present invention, and given the above definitions, the frequency of the cluster changes in the time series may also be observed, obtained or determined. Rapid changes or frequent measurements that may be assigned to higher clusters, wherein distance measurements outside a reliable or expected range are grouped, reduce the measurement reliability. In particular, cluster changes in a higher frequency lead to an increasing uncertainty of the current position estimation. For an optimization of the position estimation, the causing error type may have to be detected and minimized. Additional measured values of further transceivers or the continuity approach may decrease the temporary uncertainty.

According to a further embodiment of the present invention, the systematic error sources comprise at least one of synchronization errors, calibration errors, operational errors, device logic errors, and signal processing errors, and wherein the method further comprises one of the following steps: rebooting of measurement equipment of at least one of the robot and the plurality of reference points, applying Kalman filtering to the results of the distance measurements, and probing for a minimum detectable signal.

According to the present invention, systematic error sources associated with the above mentioned error size sxS, may be intended as to refer to the measurement uncertainty of the physical measurement in x or the position uncertainty in the model of coordinate x driven by systematic errors such as synchronization errors, calibration errors, etc.

According to any of the intended environments of the present invention as described above, and preferably with respect to a two-dimensional environment, it is advantageous that the system model associated to said environments included synchronization and calibration models, in order to account especially for any measurement related to essentially stationary transceivers, such as those so far associated to the reference points of the present invention. It may be a further advantage of the present invention, and in particular in connection to providing systematic errors evaluation in view of populating a system model of said errors, that essentially stationary reference points may comprise transceivers which are installed at very different heights to all other transceivers. In particular, even a single transceiver installed at a different but defined height may help to improve the positional accuracy, when there are a lot of obstacles in the line of sight between transceivers.

For improving the system model of the estimated positions, a specific treatment of systematic errors may comprise obtaining distance measurements from transceivers on the robot to all the transceivers of the plurality of reference points at intervals in time, so that the system model is populated with estimated positions of the essentially stationary transceivers associated with the reference points provided by distance measurements obtained from mobile transceivers associated with the robot, essentially using the robot as a mobile probe to provide the estimated positions of the plurality of reference points.

If a number of measurements from the robot to a number of reference points, provide consistently a type of results which may be deemed in a certain group of outliers, with respect to a range of expected results for the particular distances of the robot to those number of reference points, it may be advantageous to add a further step of rebooting any of the measuring equipment engaged in said number of measurements, while the results may be stored for further processing, such as, for example, comparisons, or any other processing.

According to the present invention, systematic errors, in particular associated to a system exchanging information in the form of electromagnetic signals, for example using transceiver, and in particular UWB transceivers, may be understood as essentially related to synchronization and calibration errors. However, in certain instances, they might include systematic/permanent disturbances related to any given environment, and e.g. between transceivers within said environment.

According to the present invention, the robot may be configured to maintain a system model memory of the estimated positions of the robot and a plurality of reference points, e.g. xi, yi, (possibly zi), including the uncertainties or error sizes related to each estimated position, sxi, syi, (possibly szi, ...); moreover, the system model may include any retrieved, determined or obtained parameter of systematic errors and/or possible calibration constants for each transceiver that may be introduced in the model (possibly also a calibration model with several parameters) and may store it, locally or remotely, for algorithmic calculations.

The robot according to the present invention may also be configured to maintain a persistent memory of a matrix of the distances between the transceivers associated with the reference points, whose positions may optionally be measured by an operator.

According to the present invention, a cyclical testing of all transceivers within the environment may be carried out, to identify the occurrence of systematic errors, comprising the essentially stationary transceivers associated with the reference points and the so-called mobile transceivers associated with the robot capable of moving, and which are therefore themselves assumed to be mobile in association with the moving capability of the robot according to the present invention.

According to the present invention, a cyclical testing of the transceivers associated to the plurality of reference points according to the present invention may be carried out as follows: in this instance, the distance from the robot to each of said transceivers may be measured at intervals in time. This procedure may enable individual transceivers to be identified in the multi-dimensional scaling, MDS process which deliver implausible distance measurements, or measurements providing too large or too small distances, with comparison to the rest of the other transceivers. A general offset in the distance measurement of an individual transceiver may be determined using an algorithmic process. If this general offset remains largely constant over time, for example over several control measurements, this offset may be corrected and stored in an associated calibration constant or in parameters of an associated calibration model. According to the present invention, this step may be preferred in 2D-based models in order to correct for essentially stationary transceivers associated with reference points, which were installed at very different heights to all other transceivers.

After a correction according to the present invention as described above might have been applied, a remaining statistical error for each transceiver may be left. A malfunction of an individual transceiver may be identified from the comparison of the statistical errors of the transceivers with one another and from the comparison of the error in the time sequence of the control measurements. This occurs, for example, when a comparison exceeds a threshold value, e.g. when the measurement uncertainty deviates from the other reference values by, for example, twice the standard deviation. In this case, a reboot of the transceiver or user interaction is required. The systematic error size may be increased to the new, higher value. Subsequently, the systematic error may be corrected downwards again in control measurements when a return to normality, e.g. acquisition of values as expected, has been confirmed.

This approach method may reveal particularly promising and selective when the positions of the transceivers in the environment are known very precisely, since the uncertainty on a position must always be taken into account in the control measurements. This is the case, for example, if the positions or the distances between transceivers have been measured by an operator, or if the position optimization method during operation (learning the exact position) over time has known the positions of the transceivers very precisely by probing the moving transceiver (s) are.

According to the present invention, a cyclical testing of the transceivers associated to the mobile system, robot, of the present invention may be carried out as follows: if the mobile system only has one transceiver, this may preferably be checked via MDS. The procedure is identical to the procedure as described above for essentially stationary transceivers associated with the plurality of reference points of the present invention. A challenge arises from an increased positional uncertainty which is the result of a positioning process based on a preferred assumption of continuous movement of the robot as a mobile probe. Therefore, in order to improve the position determination, the driving operation of the mobile system can be set for the control measurement. The position can be statistically improved over a time series based on measurements from a stationary system. In addition, the system may have a model memory that may be stored in the positions of the essentially stationary reference points that promise particularly good positioning. The system may be sent to any of the locations corresponding to said positions for control measurements.

Systems with two or more transceivers "on board" may allow measurements of the built-in transceivers among themselves as well as MDS with the transceivers associated with the essentially stationary reference points. This allows a more stable and steady control of the mobile transceiver.

Analogously to the case of transceivers associated with the essentially stationary reference points, calibration parameters as well as systematic errors of the transceivers built into the mobile device may be persistently stored in the system and may be available for calculations.

According to a further embodiment of the present invention, the environmental error sources comprise at least one of the multi-path signal reception errors, indirect signal reception errors, signal amplitude distortion errors, and signal phase distortion errors, and wherein the method further comprises one of the following steps: preselection of plausible measurement results and/or rejection of implausible measurement results based on a cluster-1 analysis and/or based on a continuity of a further distance measurement with a former distance measurement.

According to the present invention, environmental error sources, associated with the above mentioned error size sxP, may be intended as to refer to errors that result, for example, from the arrangement of any environmental error source in the system environment, which may influence or affect the interaction of the particular type of information exchanged between transceivers in the system, according to the type of measurements obtained, such as, for example, deriving from the interaction of exchanged electromagnetic signals with objects in the environment. Phenomena to be taken into account to this end may include: multi-pass phenomena through reflections of a direct or diffuse nature on walls, fences, bushes, furniture, or other objects in the environment, through diffraction around and absorption by objects, or refraction when penetrating them, as well as effects caused by phase shifts. Further to the given errors, it is understood that errors caused by wrong or inconsistent decisions of the UWB signal processing ("low level"), e.g. regarding the selection or suppression of existing multi-path signals may be included and may be taken into account with respect to environmental error sources.

In a preferred assumption of a continuity approach according to the present invention, as explained above, that the mobile system essentially moves continuously, and therefore, for example, only accelerates or decelerates within its own physical limits and that metrological data from the drive system, such as for example, wheel speeds, further constrain the system.

Phenomena which may give rise to disturbances in signal processing by the objects in or around the environment according to the present invention, may include multiple signal paths (through direct or diffuse reflection, diffraction) as well as absorption, refraction and diffraction. These phenomena particularly affects transceivers in front of walls, fences, bushes, etc., and applies both to essentially stationary transceivers and to the transceivers on a mobile unit such as the robot according to the present invention. Moreover, pairs of transceivers between which there are obstacles or whose optical connection axis is limited by obstacles (e.g. sharp-edged) (diffraction at edge or gaps) may also be affected. In all of these situations, multiple paths can occur between the transceivers. Physical implementation of distance measuring systems, for example, already reacts to this with suitable frequency ranges, frequency patterns and filter techniques in order to correctly estimate the real distance, which is assumed to be the shortest possible distance. For this purpose, multiple measurement methods are already used in a mixed manner in the physical implementations. However, a distance that is too short can also be estimated, e.g. B. if the signal strength at the receiver is unusually high (focus effects, etc.). In the case of moving systems, the direct path between two transceivers can also be completely blocked again and again, which means that distances that are too long are estimated.

Therefore, as described above, a valuable approach according to the present invention may rely on a time series analysis of distance measurements in particular of the distances between the individual essentially stationary transceivers, such as those associated with and/installed on reference points, and the transceivers installed on the mobile system, also identified in some preferred instances as the robot of the present invention. The measuring points along the time series may be divided into route clusters. This is done, for example, using cluster-forming algorithms. In particular, as described above, if several path clusters occur for a distance measurement, only the first cluster with the shortest distance may be deemed relevant, while measurements assigned to another cluster may be discarded, or set aside for further processing. Those of current measurements, which may be clearly assigned to the first cluster and are deemed to have been taken in last, deemed therefore sufficiently young, may then be used to determine the position. If no first cluster is measured for a distance measurement over a longer period of time, it is not taken into account in the position determination.

Moreover, the frequency of the cluster changes in the time series may be evaluated, as mentioned above, wherein rapid changes or frequent measurements assigned to higher clusters reduce the measurement reliability. An approach to face a potentially reduced measurements reliability according to the present invention, may be found in providing an overestimated environmental error size associated to the transceiver for the systems model in manner inversely proportional to the occurrence of incorrect cluster measurements, and overriding the basic data from the continuity statistics.

In particular, by using the continuity approach, data associated to the expected distance with reference to each individual transceiver of a plurality of a reference points and each of the transceivers on the robot may be continuously calculated in advance. An advantage of said approach is understood as making it possible to form statistics for each pair of transceivers which compare the cluster 1 measurements with the expected values. This method may provide a reliable standard deviation that is still overestimated. From this standard deviation, the purely statistical standard deviation may be subtracted, thus obtaining the basis for preferred environmental error sizes that may be associated to each reference points' transceiver in the model.

According to a further embodiment of the present invention, each statistical error source is associated with a plurality of distance measurements related to a common reference point, and wherein the step of updating at least one of the provided error sizes in the system model comprises decomposition of a statistical error into a constant error component and a variable error component proportional to an uncorrected result of the distance measurement.

According to the present invention, statistical error sources, associated with the above mentioned error size sxN, may be intended as to refer to the remaining statistical measurement uncertainty of physical measurements in x or model after arithmetic elimination of sxS and sxP in the x coordinate. For the mean uncertainty of several measurements, sxN = 1 / root (N-1) ^{∗} root (sum ((mean value single measurement) ^ 2)). According to the present invention, this may be understood to apply analogously to syS, syP or syN or any other coordinates, even when using other coordinate systems. In a general consideration and according to the present invention, sx = sxS + sxP + sxN.

According to the present invention, sxN may be decomposed into proportional and constant error components; for example, in a distance-dependent part sxNDist that increases linearly with the measured distance and an sxNFix that always exists regardless of the measured distance. sxNDist is then managed as sxNDistR relative to the distance, since this is to be regarded as a systemic parameter sxNDist = distance ^{∗} sxNDistR. Thus, for example: sxN = sxNFix + distance ^{∗} sxNDistR and the same in other dimensions.

According to the present invention, distance measurements between mobile transceivers and essentially stationary transceivers, according to the definitions given above, may be considered over continuous time series (multiple measurements). If only cluster-1 measurements are used, as discussed above, on the basis of a group of methods comprising at least, for example, the moving average method, the model regression method, etc., this has the advantage to make it possible to achieve statistically more solid estimates for the point in time of the submission of a best estimate based on the time series data. In the case of regression methods in particular, it may be possible to avoid the estimation lagging in the case of dynamic data. Moreover, it may be even possible to extrapolate forward for a very limited time. Based on several measured values, the error of the estimated value is thereby reduced by 1 / root (N).

Measurement series for cluster-1 distance measurements between pairs of transceivers observed over longer time scales may enable precise statistical analysis of the measurement errors. This is possible afterwards, e.g. by using a LOESS regression. As an example, with a suitable LOESS radius, each individual measurement may be viewed in relation to the LOESS expected value at this point in time. This may make it possible, in particular, to precisely evaluate measurement uncertainties that are associated to the measurement distance. For example, according to the model, sNGes = sNStat + distance ^{∗} sNDistR should apply. After considering longer time series with the associated standard deviations against the LOESS estimate, sNStat and sNDistR can be determined by regression. This can be repeated at sufficient time intervals (if sufficient quantities of measurement data are presented). If necessary, more complex models for describing errors in the individual measurements may also be parameterized in this way.

As discussed above, if a distance measurement fails, and is therefore considered an outlier, said outlier may be clearly identified and not used for statistical processes. If outliers persist, this can be taken into account in the statistical error analysis in the errors, or a distance measurement may no longer be used in the positioning model until the error situation has been rectified. As mentioned before, an advantage of considering the time series according to the present invention is that the accuracy of the location determination in regular operation in the forwards-backwards direction has to be less precise than in the left-right axis. Owing to the driving dynamics of the system, averaging tends to have negative effects in the forward-backward direction (e.g. trailing estimated value), whereas the right-left axis benefits greatly from the averaging.

According to a further embodiment of the present invention, the steps of moving, obtaining a plurality of further distance measurements, updating and estimating a further position are repeated by moving the robot along a path comprising a plurality of locations to successively reduce the error sizes in the system model.

In the meaning of the present invention, an advantage of the systemic approach may be understood as to estimate a position in an overdetermined model at any point in time. With the use of inexpensive measuring systems and the associated errors, this allows statistically solid location determinations, or position estimation, with uncertainties of less than 10 cm to be carried out.

The overdetermination according to the present invention may be initially realized through the use of several essentially stationary transceivers, such as, for example, those associated to any of the plurality of the reference points. By using reliable measurements of multiple distances and the assumption of constant movement, a position vector for the mobile system, including measurement uncertainties, may be calculated as discussed above.

When using at least two transceivers on the mobile system, an unambiguous location determination including measurement uncertainties may be derived assuming continuity, by obtaining measurements of the distances of said transceivers to at least one of the essentially stationary transceivers associated with any of the plurality of reference points.

By knowing the parameterization of the driving system, an expected position can be determined in advance (dead reckoning), regardless of further distance measurements. Every further distance measurement leads to an overdetermination of the system.

Other sensors such as an IMU, gyro systems, compass, etc. can further improve overdetermination. In particular, sensor data to determine a position that may not be measured directly are integrated by the Kalman algorithm.

As an example, in all overdetermined situations, several individual measurements Mi, carrying uncertainties, with quantified errors sMi or individual positions carrying uncertainties, Pi = (xi; yi) with quantified error size sPi = (sxi; syi) (e.g. candidate points) may be combined in an error-optimized manner according to the following rule to give the best values with minimal best error size: linear upmixing by weighting factors Gi with Gi = 1 / sMi ^ 2 applies: Mopt = sum (Gi ^{∗} Mi) / sum (Gi) with optimized error sMopt = root (1 / sum (Gi)). The best candidate points may be found in the middle between vertex points. The assumed best position is again found in the middle of the candidate points. A similar procedure may be applied to the coordinates in point vectors to be mixed up, etc. Not only may points be linearly combined with said method of weighted upmixing, but it is also understood that said weighted upmixing may also reduce an error size.

For moving averages (decaying average models, ...) or methods of exponential smoothing on measurement data recorded in time series, there is also a reduced uncertainty of the value 1/square root (N) compared to the initial scatter of the individual measurement for the best values determined for regressive methods (model regression, LOESS regression, etc.). Here the optimized prediction results from the forecast value of the model P (t) and its optimized error size sP = 1 / root (N) ^{∗} sum (root ((P (ti) -mi) ^ 2)).

Systemically coupled, error-prone quantities, in particular quantities which are related to one another by mathematical or physical models, are estimated in an optimized manner by the Kalman algorithm, in order to deliver both the optimized estimated value x and the associated minimum error size.

According to a further embodiment of the present invention, a robot is provided which maintains a system model of an estimated position of the robot and an estimated position of a plurality of reference points, the robot and each one of the plurality of reference points being associated with different independent error sources, the robot comprising at least one transceiver configured to repeatedly perform distance measurements with respect to at least a subset of the plurality of reference points, the robot being configured to move and to update at least the estimated position of the plurality of reference points of the system model based on results of the distance measurements performed at different locations of the robot, corresponding to the estimated positions of the robot, preferably by performing at least a subset of the steps of any one of the methods described in the present invention.

The system model according to the present invention may include estimated positions of the plurality of reference points as obtained by mutual signal comparison, wherein said estimated positions of the plurality of reference points are obtained by distance measurements of each of the plurality of reference points from one another, and possibly by repeating said measurements for each transceiver associated with each of the reference points. By using this approach, the first estimated positions of the system model may be estimated, but interference of environmental error sources with the measurements may not be ruled out. One possible disadvantage of this possible interference may be found in poorer positioning results of a mobile system that relies on knowledge of the model positions.

However, the robot or mobile system according to the present invention may move permanently in the environment and may therefore act as a mobile measuring probe (sample). This succeeds if, once the mobile system's position has been successfully estimated, the measured distance data are again used to recalibrate the model position data of the essentially stationary reference points.

Here, too, the basic requirement is that the measurement data is used in accordance with the measurement error and, in particular, that the uncertainty of the position determination has an influence on the calibration. The adjustment of the positions is therefore always carried out in defined calibration steps.

Therefore, according to the present invention, a very precise position data set with minor position errors is established in the model over a longer period of operation via the continuous "probing", combining the use of the robot as a mobile probe and the overdetermination of the system model of estimated positions. This in turn supports ongoing position determination, establishing a learning system.

According to a further embodiment of the present invention, the at least one transceiver of the robot according to the present invention may comprise at least one ultra-wideband, UWB, transceiver, in the meaning described above.

This enables the use of the robot for obtaining measurements based on said transceivers, and in particular distance measurements of the transceiver or transceivers of the robot, therefore mobile transceivers, from other transceivers, in particular transceivers installed on or associated with the reference points of the present invention, therefore essentially stationary transceivers. An advantage of obtaining distance measurements between mobile and stationary transceivers is a likelihood of obtaining distance measurements that may be made more accurate, according to the treatment of the provided error sizes associated to each of said distance measurements.

According to a further embodiment of the present invention, the robot or autonomous driving system according to the present invention may comprise at least one sensor, in particular one of a spatial orientation sensor, positioning sensor, electromagnetic sensor, and inertial sensor.

In particular, the robot may comprise further sensor equipment in order to support positioning such as gyroscope systems to determine spatial orientation, GPS sensors, RFID sensors, IMU (Inert System), angle of rotation sensors for travel drives, current measurement technology for measuring the power consumption of travel drives, optical systems for determining angle information for speaker reflection devices, measurement technology for determining the azimuth and height of the sun, etc. Additionally, the autonomous driving system may comprise a computing unit, and/or computing unit may be set up in the base station or set up as remotely or as a separate computing unit which has sufficiently powerful processors and a sufficiently large persistent memory to calculate and maintain a model representation of the environment and of the estimated positions of the elements of the positioning system.

The use of further sensors on the robot supports the steps to carry out the positioning methods of the present invention.

According to a further embodiment of the present invention, the robot is a lawnmower moving within a lawn, and the model is used to determine a path for mowing the lawn, and wherein the lawn comprises each one of the reference points, such that the robot can receive a signal transmitted by at least one, preferably more than one, of the reference points at any position within the lawn.

Additionally and or alternatively, the robot of the present invention may be capable of performing a range of tasks, as defined above, and to this end, the robot may be further equipped with a range of means for performing each task as also defined above, or any combination thereof.

According to a further embodiment of the present invention, a positioning system is further provided, comprising the robot according to any one the embodiments above and the plurality of reference points as discussed in the description, and wherein each one of the plurality of reference points may comprise at least one transceiver of a plurality of transceivers, which may be configured to interact with the robot to perform a time-of-flight measurement.

As discussed above, according to the present invention transceivers may exchange information and contribute to the attainment of distance measurements in a variety of ways, and preferably via time-of-flight measurements, wherein the time that takes the information (signal) to travel from the transmitter to the receiver is measured.

This method has the advantage of being immediately applicable to the transceivers according to the present invention, and may provide error sizes associated with distance measurements that may be conveniently handled for precise position estimation.

According to a further embodiment of the present invention, the at least one transceiver of the positioning system according to the present invention comprises at least one ultra-wideband, UWB, transceiver. Transceivers and UWB transceivers according to the present invention have been described above, as they may reveal fit for this further embodiment of the present invention.

The following figures, schematics and examples are provided merely for the purpose of illustrating exemplary arrangements of elements and methods as discussed in the present description, and/or exemplary ways of carrying out the invention. It is understood that the provisions of said exemplary figures does not aim to limit the present invention in any way, and may at times refer to preferred arrangements or ways to carry out the invention.

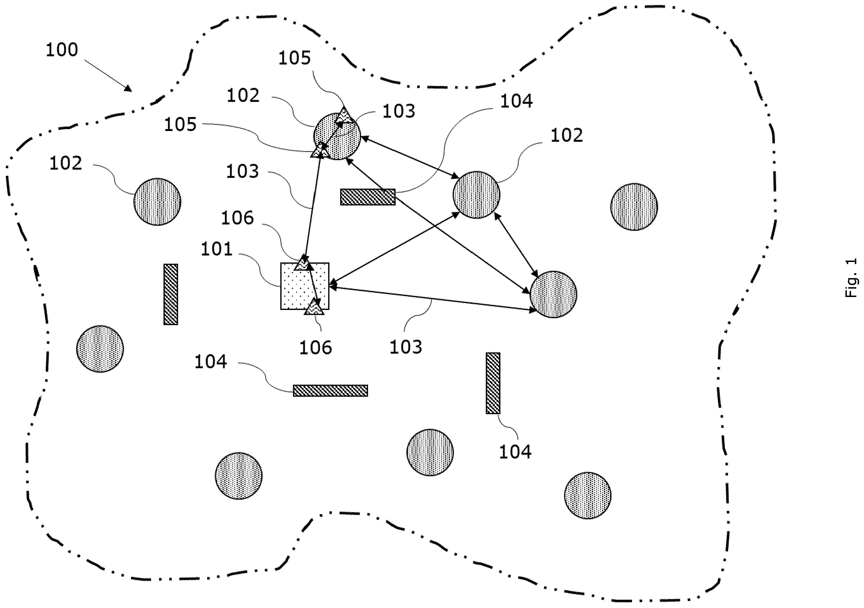

Fig. 1: Schematic representation of an exemplary environment, according to the present invention, herein shown as a two-dimensional space, delimited by a virtual delimiting line, for the purpose of illustration/representation, wherein the methods of any of the methods claims of the present invention may take place. A plurality of distance measurements relative to a first subset of a plurality of reference points is illustrated with the arrows.

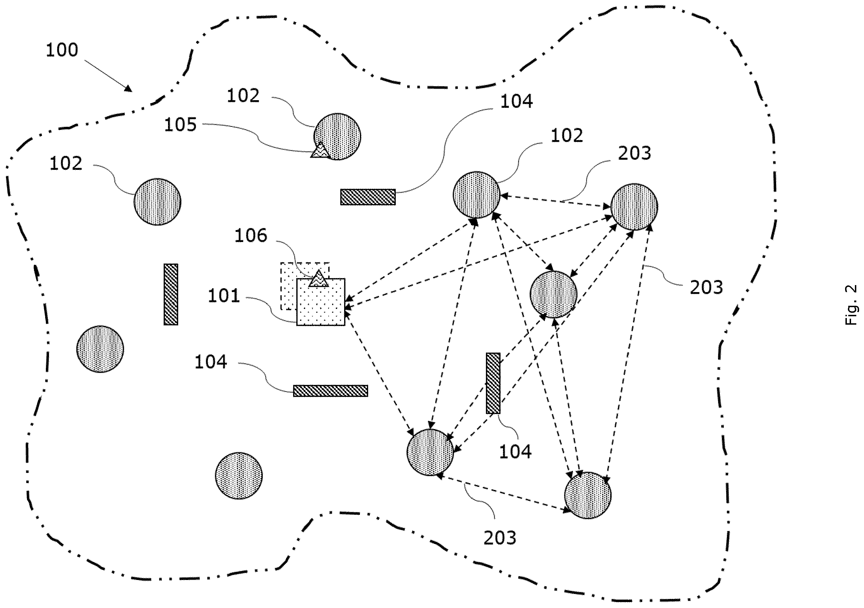

Fig. 2: Schematic representation of an exemplary environment, according to the present invention, herein shown as a two-dimensional space, delimited by a virtual delimiting line, for the purpose of illustration/representation, wherein the methods of any of the methods claims of the present invention may take place. A further plurality of distance measurements relative to a second subset of a plurality of reference points is illustrated with the arrows, wherein the robot, represented by a square object, has moved to a further location.

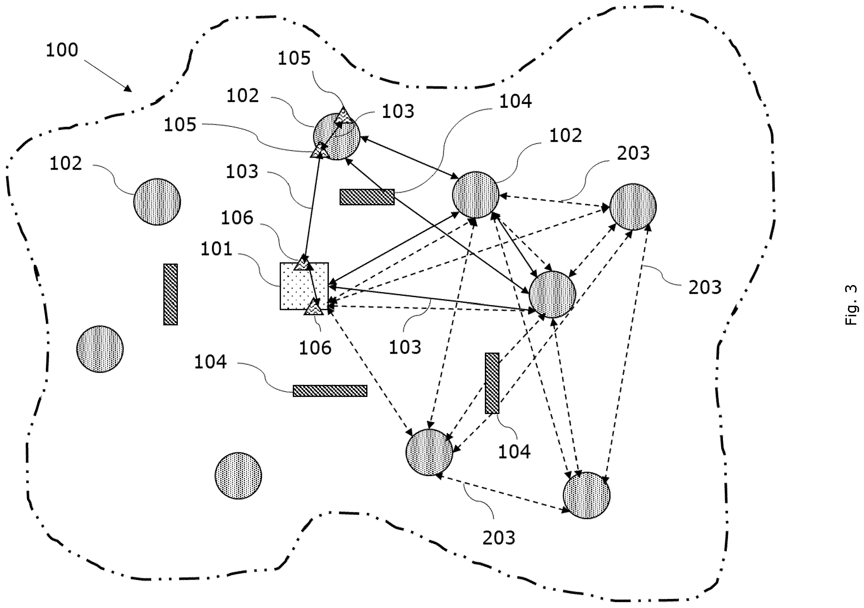

Fig 3: Schematic representation of an exemplary environment, according to the present invention, herein shown as a two-dimensional space, delimited by a virtual delimiting line, for the purpose of illustration/representation, wherein the methods of any of the methods claims of the present invention may take place. Both a plurality of distance measurements relative to a first subset of a plurality of reference points and a further plurality of distance measurements relative to a second subset of a plurality of reference points are shown, wherein the robot is shown in one location only, for both plurality of distance measurements.

Fig. 1, 2 and 3 show a representation of a robot according to the present invention as a square, a plurality of reference points according to the present invention as circles and a positioning system according to the present invention which comprises the robot and at least a subset of the plurality of reference points. Additionally, an exemplary representation of a type of error sources is given, in particular of environmental error sources, in the form of rectangular obstacles that can be found in the way of an exchange of information (signal) between any two elements of the positioning system. Said exchange of information (signal) between any two elements of the positioning system is illustrated as arrow connectors to represent the distance measurements which may take place between any two elements of the positioning system. Transceivers according to the present invention are herein represented as small triangles. Not all transceivers are shown. The underlying assumption is that information (signal) is exchanged between pairs of transceivers, at least one installed on the robot and at least one installed on a reference point. It is to be understood that arrows indicate exchange of information between the mentioned, and illustrated, elements of the positioning system of the present invention, occurs through transceivers installed on board of each element. It is to be understood that one set of distance measurements is associated with the exchange of information (signal) between a pair of transceivers, and may be intended to include all measurements relative to said pairs of transceivers, until all the possible combinations of pairs of transceivers are exhausted.

According to the present invention, it has to be understood that descriptions and examples may refer to a way of carrying out the invention based on an exchange of information by means of electromagnetic signals, but the method as disclosed in the invention, together with the system for carrying it out, may be implemented using any other typology of information, which ultimately may be able to provide the desired distance measurements as intended herein.

In the following, a schematic drawing is provided, describing the relationships among the elements of the present invention. The following representation is by no means intended to be limiting to the ways a skilled person may understand and devise carrying out the invention from the given description and common general knowledge, and is intended herein only as supporting information to facilitate a faster approach to understanding the method and systems of the present invention.

Fig. 1, 2 and 3 illustrate a robotic system consisting of an autonomously driving robot that has computer equipment and that is able to process sensor data, and several UWB transceivers that measure distance in quick succession, for example via time- of-flight measurements between the transceivers. A base station that serves as a home base and charging station may optionally be present, but it is not shown to reduce the representation complexity.

In Fig. 1, in particular, a plurality of distance measurements 103 relative to a first subset of a plurality of reference points 102 is illustrated with the solid arrows. Only a representative number of measurements is shown, for the sake of simplicity, and it is to be understood that the measurements are obtained among pairs of receivers, even if only shown in a few instances. Moreover, if more than one transceiver are present on a given element, distance measurements will include also distance measurements between transceivers on the same element. As can be seen, In Fig. 2, the robot 101 has moved to a further location, and a further plurality of distance measurements 203 relative to a second subset of a plurality of reference points 102 is obtained, illustrated with the dashed arrows. In Fig. 3, both a plurality of distance measurements 103, relative to a first subset of a plurality of reference points 102, and a further plurality of distance measurements 203, relative to a second subset of a plurality of reference points, are obtained, and illustrated, respectively, with the solid and dashed arrows, wherein the location of the robot 101 has remained unaltered, and a location of the robot 101 has been selected as a further location. In this case, therefore, both pluralities of distance measurements contribute to estimating an initial location of the robot 101.

In all figures the distribution of the essentially stationary transceivers 105, associated with the plurality of reference points 102, is represented in the environment 100. An ideal path describing the area that the robot is intended to cover, may run across the environment 100, so that at each location across the environment 100, each of the transceivers 105 of any of the reference points may exchange information with at least one of the mobile transceivers 106, or the transceivers 106 associated with the robot 101.

The robot 101 having at least one transceiver 106 may be also referred to as an autonomously driving system; said system is equipped with at least one UWB transceiver, or with two or more transceivers for optimized measurements. Optionally, a base station (not shown) may be equipped with at least one UWB transceiver, or with two or more transceivers for optimized measurements.

Further sensor equipment to support positioning, navigation and measurements may be installed on the autonomously driving system, as previously discussed.

The robot 101 or autonomously driving system, which in one particular case may be an autonomous mower, may be further equipped with a computing unit. A computing unit may be alternatively or additionally installed in the base station or set up as a separate computing unit, having sufficiently powerful processors and a sufficiently large persistent memory to calculate and maintain a model representation of the environment. Any of the possible computing units may carry out the proposed cluster formation, time series and measurement error scatter and optimized calculation starting from the pluralities of distance measurements for position determination.

In particular, any of the computing units may contribute to the systematic handling of systemic errors, namely systematic, statistical and environmental errors, associated to different independent error sources, such as systematic, statistical and environmental error sources, through evaluation and survey of suitable approaches, through systematic calculation of the error propagation, and through optimized calculation of error-prone variables in overdetermined situations.

In the environment 100, features and/or constraints of the environments, such as fences, walls, bushes, are also taken into account and some are represented as a subset of environmental error sources 104. It is to be noted that the given representation has a two-dimensional character, in which the z direction is not shown.

All measurements comprise a certain size of uncertainty, which has not been represented for the sake of simplicity.

### List of References

- 100: environment
- 101: robot
- 102: reference points
- 103: distance measurement
- 104: walls, fences, bushes
- 105: essentially stationary transceiver
- 106: mobile transceiver
- 203: further distance measurement

## Claims

1. A positioning method for a robot (101) based on a system model of an estimated position of the robot and estimated positions of a plurality of reference points (102) within an environment (100), the method comprising:
- obtaining a plurality of distance measurements (103) from at least a first subset of the plurality of reference points to at least one of the robot (101) and at least one of the plurality of reference points (102), each distance measurement of the plurality of distance measurements being affected by at least one of a plurality of different independent error sources;
- providing an error size for each one of the distance measurements (103), the error size being associated to at least one of the different independent error sources;
- estimating a position of the robot (101) based on the plurality of distance measurements (103) and the provided error sizes;
- moving the robot (101) from a location corresponding to the estimated position of the robot (101) to a further location or selecting a further location the robot (101) is able to move to within the environment (100);
- obtaining a further plurality of distance measurements (203) from at least a second subset of the plurality of reference points (102) to at least one of the robot (101) and at least one of the plurality of reference points (102), each distance measurement (203) of the further plurality of distance measurements (203) being affected by at least one of the different independent error sources;
- updating at least one of the provided error sizes in the system model based on the further plurality of distance measurements (203);
- estimating a further position of the robot (101) corresponding to the further location based on the further plurality of distance measurements (203) and the at least one updated error size.

2. The positioning method of claim 1, wherein the distance measurements (103, 203) are carried out using a plurality of transceivers (105, 106), preferably ultra-wideband, UWB, transceivers, wherein at least one, preferably more than one, of the plurality of transceivers (106) is installed on the robot (101), and wherein each of the plurality of reference points (102) comprises at least one, preferably more than one, of the plurality of transceivers (105).

3. The positioning method of claims 1 or 2, wherein the robot (101) comprises at least a first transceiver (105) and a second transceiver (105) of the plurality of transceivers, arranged on a housing of the robot at a given distance from one another, and wherein the system model comprises a direction-of-travel information.

4. The positioning method of any one of claims 1 to 3, wherein the robot (101) moves within the environment (100), and wherein the environment (100) comprises the reference points (102) and at least a subset of the different error sources, such that the robot (101) can receive a signal transmitted by at least one, preferably more than one, of the reference points (102) at any position within the environment (100).

5. The positioning method of any one of claims 1 to 4, wherein an initial estimated position is provided for the system model for at least one, preferably each one, of the plurality of reference points (102).

6. The positioning method of any one of claims 1 to 5, wherein the steps of estimating the positions are based on a set of mathematical relationships, which are overdetermined with respect to each plurality of distance measurements (103, 203), res pective ly.

7. The positioning method of any one of claims 1 to 6, wherein the steps of obtaining distance measurements (103, 203) are repeated until a predetermined value for the error size is achieved.

8. The positioning method of any one of claims 1 to 7, wherein the distance measurements (103, 203) to which a value for the error size is associated that is outside of a range of frequently determined error sizes is discarded or set aside for further processing.

9. The positioning method of any one of claims 1 to 8, wherein each one of the distance measurements (103, 203) is considered to be affected by at least one of:
systematic error sources, associated with measurement errors caused by at least one of the robot (101), at least one of the plurality of reference points (102) itself, or by at least one transceiver; environmental error sources (104), associated with measurements errors caused by objects located in proximity to the robot (101) and/or to at least one of the plurality of reference points (102); and, statistical error sources associated with remaining errors caused by stochastic variations.

10. The positioning method of claims 1 to 9, wherein at least a subset of each of the plurality of distance measurements (103) or of each of the further plurality of distance measurements (203) relative to one or more of the reference points (102) are clustered into route clusters of distance measurements (103, 203) using cluster-forming algorithms.

11. The positioning method of any one of claims 9 to 10, wherein the environmental error sources (104) comprise at least one of the multi-path signal reception errors, indirect signal reception errors, signal amplitude distortion errors, and signal phase distortion errors, and wherein the method further comprises one of the following steps: preselection of plausible measurement results and/or rejection of implausible measurement results based on a cluster-1 analysis and/or based on a continuity of a further distance measurement with a former distance measurement.

12. A robot (101) maintaining a system model of an estimated position of the robot (101) and an estimated position of a plurality of reference points (102), the robot (101) and each one of the plurality of reference points (102) being associated with different independent error sources, the robot (101) comprising at least one transceiver (106) configured to repeatedly perform distance measurements (103, 203) between the robot (101) and at least a subset of the plurality of reference points (102), the robot (101) being configured to move and to update at least the estimated position of the plurality of reference points (102) of the system model based on results of the distance measurements (103, 203) obtained at different locations of the robot (101), corresponding to the estimated positions of the robot (101), preferably by performing at least a subset of the steps of any one of the methods of claims 1 to 11.

13. The robot (101) according to claim 12, wherein each one of the distance measurements (103, 203) is considered to be affected by at least one of: systematic error sources, associated with measurement errors caused by at least one of the robot (101), at least one of the plurality of reference points (102) itself, or by at least one transceiver (105, 106); environmental error sources (104), associated with measurements errors caused by objects located in proximity to the robot (101) and/or to at least one of the plurality of reference points (102); and, statistical error sources associated with remaining errors caused by stochastic variations.

14. A positioning system, comprising the robot (101) according to any one of claims 12 to 13 and the plurality of reference points (102), each one of the plurality of reference points (102) comprising at least one transceiver (105) of a plurality of transceivers (105) and being configured to interact with the robot (101) to perform a time-of-flight measurement.

15. Use of the robot (101) according to claims 12 to 13 or the positioning system according to claim 14 for at least any one of: mowing a lawn, ventilating, scarifying, blowing leaves, fertilizing, sowing, sweeping, vacuuming, leaf vacuuming, transporting, polishing, snow clearing, etc., or any combination thereof.
